Europäisches Patentamt

European Patent Office

Office européen des brevets

(11) Veröffentlichungsnummer: **0 255 060**
**A2**

(12) **EUROPÄISCHE PATENTANMELDUNG**

(21) Anmeldenummer: **87110745.4**

(22) Anmeldetag: **24.07.87**

(51) Int. Cl.⁴: **B05B 9/04 , B29B 7/74**

(30) Priorität: **28.07.86 DE 8620204 U**

(43) Veröffentlichungstag der Anmeldung:
**03.02.88 Patentblatt 88/05**

(84) Benannte Vertragsstaaten:
**AT BE DE FR GB NL SE**

(71) Anmelder: **Firma COCON Kunststoffen bv**
**Vlietskade 32**
**NL-4241 XN Arkel(NL)**

(72) Erfinder: **van der Vliet, Jan**
**Dr. Biegelstraat 4**
**NL-4205 AM Gorinchem(NL)**

(74) Vertreter: **Bauer, Wulf, Dr.**
**Wolfgang-Müller-Strasse 12**
**D-5000 Köln 51 (Marienburg)(DE)**

(54) **Spritzpistole für das Verspritzen von schäumenden Kunststoffen, insbesondere von einkomponentigem Polyurethanschaum.**

(57) Die Spritzpistole für das Verspritzen von - schäumenden Kunststoffen, insbesondere von ein-komponentigem Polyurethan, hat ein Gehäuse (20), an dem ein Handgriff (24) ausgebildet ist, ein über einen schwenkbaren Abzugshebel (40, 42) betätigbares Steuerventil (36) angeordnet ist und ein inneren Kanal (26), der ein vorderes Austrittsende mit einem Anschlußbereich für einen ein Prepolymer enthaltenden Druckbehälter verbindet, ausgebildet ist.
Im Gehäuse (20) ist in unmittelbarer Nähe des Anschlußbereiches ein Kugelventil (30) im Kanal (26) angeordnet. Mit dem Steuerventil (36) ist ein Spritz-rohr (54) lösbar verbunden.

EP 0 255 060 A2

## Spritzpistole für das Verspritzen von schäumenden Kunststoffen, insbesondere von einkomponentigem Polyurethanschaum

Die Erfindung bezieht sich auf eine Spritzpistole für das Verspritzen von schäumenden Kunststoffen, insbesondere von einkomponentigem Polyurethan, mit einem Gehäuse

-an dem ein Handgriff ausgebildet ist,
-in dem ein über einen schwenkbaren Abzugshebel betätigbares Steuerventil untergebracht ist und
-das einen inneren Kanal aufweist, der ein vorderes Austrittsende, an das ein Spritzrohr angesetzt ist, mit einem Anschlußbereich für einen den Kunststoff in Form eines Prepolymers enthaltenden Druckbehälter verbindet.

Bei der vorbekannten Spritzpistole der eingangs genannten Art ist am vorderen Austrittsende des Gehäuses ein starres Metallrohr befestigt, das in seinem vordersten Bereich konisch verjüngt ist und eine kleine, zentrische Austrittsöffnung hat. Diese bildet zusammen mit einer dünnen Stange ein Nadelventil, das demgemäß so angeordnet ist, daß das Spritzrohr in seinem vordersten Bereich verschlossen oder in wählbarem Maße geöffnet werden kann. Die Nadel dieses Nadelventils wird über den Abzugshebel bewegt, sie befindet sich normalerweise in der vordersten Position, in der sie mit dem vordersten Ende des Spritzrohres bündig abschließt. Wird sie über den Abzugshebel nach hinten gezogen, so wird die Austrittsöffnung zunehmend freigegeben.

Die Austrittsöffnung ist über den inneren Kanal, der im wesentlichen L-förmig verläuft, mit dem Anschlußbereich verbunden. In Nähe dieses Anschlußbereichs befindet sich ein Rückschlagventil im Kanal.

Mit derartigen Spritzpistolen werden nach dem Schäumen erhärtende Kunststoffe versprizt, beispielsweise einkomponentige Polyurethan-Schaumstoffe, wie Prepolymere. Derartige Schäume werden als Montageschaum zum Montieren, Kleben, Füllen und Isolieren eingesetzt. Sie härten teilweise halbhart, teilweise hart aus. Einkomponentige Polyurethanschäume härten durch Aufnahme von Feuchtigkeit, die normalerweise der Luft entnommen wird, aus. Ausgehärteter Schaum ist unlöslich und kann nur mechanisch entfernt werden. Es muß daher vermieden werden, daß innerhalb der Spritzpistole befindlicher Schaum aushärten kann. Um dies zu erreichen, schreibt der Hersteller der vorbekannten Spritzpistole vor, daß grundsätzlich ein gefüllter Druckbehälter am Anschlußbereich angeschraubt ist und daß ein Wechsel eines entleerten Druckbehälters gegen einen neuen, gefüllten Druckbehälter rasch, jedenfalls innerhalb einer Zeit von einer Minute, erfolgen soll.

Nun ist aber bei der vorbekannten Spritzpistole ein Aushärten des Schaumes während einer Arbeitspause oder während längerer Unterbrechungen auf die Dauer nicht auszuschließen. Das Rückschlagventil verschmutzt relativ rasch und dichtet nicht ausreichend gegen Luftfeuchtigkeit ab. Es dringt also stets etwas Luftfeuchtigkeit ein, so daß Schaum im Bereich des Kanals erhärtet. Er läßt sich dort nur schwer entfernen, weil der Zugang durch das Rückschlagventil erschwert ist. Härtet zudem der im starren Metallrohr befindliche Schaum aus, so muß die Pistole arbeitsaufwendig und mühsam gereinigt werden.

Nun kann man zwar die im Bereich des Rückschlagventils auftretenden Probleme dadurch umgehen, daß stets eine gefüllte Druckdose an den Anschlußbereich angesetzt ist, so daß der innere Kanal der Spritzdose ständig unter Überdruck gehalten wird und insbesondere von Seiten des Anschlußbereichs keine Luft in den Kanal eindringen kann. Ständig eine Druckdose an der Pistole zu haben, ist aber nachteilig und oftmals lästig. Zudem dichtet die bekannte Pistole nicht vollständig ab, so daß ständig etwas Treibgas verlorengeht. Auf die Dauer wird der Druckbehälter entleert, sein Inhalt ist nicht mehr zu gebrauchen.

Darüberhinaus ist die vorbekannte Spritzpistole relativ kompliziert aufgebaut. Die große Entfernung von etwa 20 und 30 cm zwischen dem Abzugshebel und dem eigentlichen Nadelventil läßt erkennen, daß eine Übertragung der Schließbewegung des Nadelventils über eine große Strecke erforderlich ist, der entsprechende Mechanismus ist gegen aushärtendem Schaum anfällig und kann nur schwierig gereinigt werden.

Insbesondere bei einem Wechsel des Druckbehälters ist es aber nicht auszuschließen, daß Luftfeuchtigkeit in den Raum des inneren Kanals des Gehäuses gelangt. Weiterhin quillt während des Auswechselns stets Schaum aus dem Anschlußbereich nach außen, wodurch das Einsetzen eines neuen, gefüllten Druckbehälters schwieriger wird und mit Verschmutzungsgefahr verbunden ist.

Schließlich bildet das Rückschlagventil eine Engstelle im inneren Kanal, die den Durchfluß von Schaum stark drosselt. Der aus dem Druckbehälter kommende Schaum muß an der Kugel des Rückschlagventils vorbeiströmen und stets ausreichend Druck haben, um die Kugel gegen die sie belastende Feder wegzudrücken. Neben dem Widerstand, den das Rückschlagventil konstruktionsbedingt auf den Schaumfluß ausübt und der den Austritt einer großen Schaummenge, wie sie beispielsweise beim Verfüllen großer Hohlräume gewünscht wird, beschränkt, kann der Druckbehälter nur auf einen gewissen Mindestdruck entleert werden, der dem Gegendruck des Rückschlagventils entspricht. Eine vollständige Leerung des Druckbehälters ist unter diesen Umständen nicht möglich.

Hier setzt nun die Erfindung ein. Sie hat es sich zur Aufgabe gemacht, die vorbekannte Spritzpistole dahingehend weiterzuentwickeln und zu verbessern, daß ein Aushärten von im inneren Kanal befindlichem Schaumkunststoff zuverlässiger vermieden wird, eine Reinigung der Pistole in dem Fall, daß Schaumkunststoff ganz oder teilweise im inneren Kanal ausgehärtet ist, vereinfacht wird, der Durchfluß von Schaum kunststoff zum Austrittsende nicht beengt wird und ein Druckbehälter bis auf normalen Umgebungsdruck entleert werden kann.

Diese Aufgabe wird durch eine Spritzpistole der eingangs genannten Art gelöst, bei der in unmittelbarer Nähe des Anschlußbereichs ein (erstes) Kugelventil im Kanal angeordnet ist.

Ein Kugelventil weist einen relativ großen Öffnungsquerschnitt auf, der nur etwas kleiner ist als der Durchmesser der verwendeten Kugel. Gegenüber praktisch allen anderen Ventilen besteht der Vorteil, daß das Kugelventil im geöffneten Zustand den Innenquerschnitt des Kanals praktisch nicht beeinflußt, gegenüber anderen Ventilen hat ein Kugelventil keine Nebenräume, in denen sich Schaum festsetzen kann, der Innenkanal kann bequem gereinigt werden, er ist von der Seite des Anschlußbereichs her frei zugänglich, wenn das Kugelventil geöffnet ist. Das Kugelventil bietet zudem einen äußerst zuverlässigen, sehr dichten Abschluß des inneren Kanals zum Anschlußbereich hin. Hierdurch ist es nicht mehr notwendig, ständig einen Druckbehälter am Anschlußbereich anzuschließen, vielmehr kann nach Schließen des Kugelventils der Druckbehälter entnommen werden. Ein Eintritt von Luftfeuchtigkeit in den inneren Kanal von der Seite des Anschlußbereichs her ist dann zuverlässig vermieden. Man hat also mehr Zeit für das Auswechseln des Druckbehälters, die Verschmutzungsgefahr ist gebannt. Darüberhinaus ermöglicht das Kugelventil eine Dosierung des maximalen Flusses an Kunstschaumstoff durch den inneren Kanal und damit zur Austrittsspitze des Spritzrohres. Eine derartige Vordosierung ist bei der vorbekannten Spritzpistole praktisch nicht möglich. Die Vordosierung ist vorteilhaft, wenn mit der Pistole beispielsweise einerseits kleine Hohlräume ausgeschäumt werden sollen, andererseits aber - was vor allem im Neubaubereich auftritt - große Volumina ausgeschäumt werden sollen. In diesen Fällen kann durch Einstellen des Kugelventils der maximale Schaumfluß an der Austrittsspitze vorgegeben werden. Auf Grund der durch das Kugelventil erfolgenden Flußvorgabe kann der Abzugshebel beim jeweiligen Einsatz stets über seinen gesamten Winkelbereich geschwenkt werden. Über den Abzugshebel ist dann eine Regelung der zeitlichen Schaummenge zwischen Null und dem durch das Kugelventil vorgegebenen Wert möglich.

Selbst wenn im Bereich des Kugelventils Schaum erhärtet ist, kann dieses noch betätigt werden, da beim Betätigen des Kugelventils kein Material verdrängt wird. Ein sicherer Abschluß ist also auch in diesem Fall noch möglich. Besonders vorteilhaft ist es insbesondere für die Reinigung, wenn der Innendurchmesser des Kanals auf den freien Durchgangsquerschnitt des geöffneten Kugelventils angepaßt ist und die Kanalwände möglichst bündig, ohne seitliche Taschen, Engstellen oder Ausweitungen, in den Bereich des Kugelventils übergehen.

In einer Weiterbildung der Erfindung wird vorgeschlagen, auch das Steuerventil als Kugelventil anzuordnen und es in unmittelbarer Nähe des vorderen Austrittsendes anzuordnen.

Auf Grund der beiden Kugelventile wird ein äußerst zuverlässiger, sehr dichter Abschluß des inneren Kanals nach außen erreicht. Es ergibt sich insgesamt ein wesentlich einfacherer Aufbau als bei der vorbekannten Spritzpistole der eingangs genannten Art. Außer den beiden Kugeln der Kugelventile sind keine bewegten Teile im inneren Kanal vorgesehen, so daß diese einfach auszubilden und einfach zu reinigen ist, auch die Funktionssicherheit ist verbessert.

Das zweite Kugelventil, das über den Abzugshebel betätigbar ist, befindet sich in unmittelbarer Nähe des vorderen Austrittsendes des Gehäuses, an ihm ist ein Spritzrohr angesetzt. Das Spritzrohr hat nur noch die Funktion eines führenden, leitenden Rohres, es kann elastisch, biegsam, biegeweich oder durch Wärmezufuhr biegbar (zum Beispiel thermoplastisches Material) ausgebildet werden, jede beliebige Länge und jeden beliebigen Durchmesser haben. Dadurch wird erreicht, daß auch an unzugänglichen Stellen, die mit der vorbekannten Spritzpistole nicht ausschäumbar sind, gearbeitet werden kann.

Insgesamt ist die erfindungsgemäße Spritzpistole also wesentlich besser regelbar, besser zu reinigen, besser gegen Erhärten des im Kanal befindlichen Kunststoffschaums geschützt und besser auch für sehr diffizile, unzugängliche Spritzstellen geeignet als die vorbekannte Spritzpistole.

Anstelle eines zweiten Kugelventils (als Steuerventil) in Nähe des vorderen Austrittsendes des Gehäuses ist es auch möglich, dort ein Nadelventil anzuordnen. Es ist möglichst in Nähe des Abzugshebels 40, 42 und an der frontseitigen Fläche des Gehäuses 20 angeordnet. Es ist vorteilhaft, den Abstand zwischen Nadelventil und dem ersten Kugelventil möglichst klein zu machen. Hierdurch wird einerseits die Mechanik vereinfacht und die Gefahr vermieden, daß durch Verbiegen des relativ langen Spritzrohres die Funktion des Nadelventils beeinträchtigt wird. Andererseits aber erhält man die Möglichkeit, anstelle des starren, langen Metallrohres ein simples Spritzrohr vor dem Nadelventil anzuordnen, das - wie oben ausgeführt - dem jeweiligen Anwendungszweck angepaßt werden kann, preisgünstig ist, austauschbar mit der Pistole verbunden ist und aus einem Material hergestellt werden kann, aus dem sich erhärteter Schaum einfach entfernen läßt. Wenn die Innenwand des Spritzrohres glatt und zylindrisch, möglichst sogar geringfügig kegelförmig, ist, läßt sich der erhärtete Kunstschaumkern aus dem Spritzrohr entfernen. Sollte dies nicht gelingen, kann das Spritzrohr ausgetauscht werden.

Das zweite Ventil, sei es nun ein Kugelventil oder ein Nadelventil ist also möglichst nahe am ersten Kugelventil angeordnet. Hierdurch kann sich nur eine geringe Menge Kunststoffschaum zwischen den beiden Ventilen ansammeln. Dieser kann jedoch, sollte er einmal erhärten, gut entfernt werden.

Vorzugsweise ist das Spritzrohr an seinem Eintrittsbereich mit einer Muffe versehen, die den Innenraum des Gehäuses außerhalb des zweiten Ventils praktisch vollständig ausfüllt. Hierdurch wird einerseits eine bequeme Befestigung des Spritzrohres erreicht, andererseits aber erzielt, daß wenig Toträume entstehen, die sich mit Kunststoffschaum füllen könnten.

Die Mutter, mit der das Spritzrohr befestigt wird, ist vorzugsweise als Überwurfmutter mit Vorsprüngen ausgebildet, sie kann dadurch manuell erfaßt und gedreht werden, so daß insgesamt ein sehr bequemer, rascher Austausch des Spritzrohres möglich ist.

In vorzugsweiser Weiterbildung verläuft der Anschlußbereich nach vorn geneigt und insbesondere parallel, vorzugsweise sogar gleichachsig zum Handgriff. Die üblichen Druckbehälter für Kunststoffschaum haben üblicherweise kein inneres Steigrohr, sie müssen daher über Kopf verarbeitet werden. Die beschriebene Anordnung ermöglicht es, daß der Druckbehälter auch dann noch nach unten zeigt, wenn das Spritzrohr senkrecht nach oben weist. Somit lassen sich also Decken und insbesondere Fugen in Decken ausfüllen, ohne daß befürchtet werden muß, daß aus der Spritzpistole lediglich Treibgas austritt.

Weitere Vorteils und Merkmale der Erfindung ergeben sich aus den übrigen Ansprüchen sowie der nun folgenden Beschreibung eines nicht einschränkend zu verstehenden Ausführungsbeispiels der Erfindung, das unter Bezugnahme auf die Zeichnung im folgenden näher erläutert wird. In dieser zeigen:

Fig. 1 eine Seitenansicht einer erfindungsgemäßen Spritzpistole mit eingezeichnetem inneren Kanal,

Fig. 2 ein Schnitt entlang der Schnittlinie II-II in Figur 1 durch ein zweites Kugelventil,

Fig. 3 eine Seitenansicht eines ersten Ausführungsbeispiels eines Spritzrohres und

Fig. 4 eine Seitenansicht eines zweiten Ausführungsbeispiels eines Spritzrohres.

Die Spritzpistole nach den Figuren hat ein einstückiges Gehäuse 20, das ein kolbenförmiges Hauptteil 22 ausbildet, von dem aus im Winkel von etwa 60 Grad ein Handgriff 24 nach unten vorspringt. Hauptteil 22 und Handgriff 24 haben etwa den gleichen Durchmesser, der Hauptteil 22 kann jedoch wesentlich kürzer als der Handgriff 24 ausgeführt sein.

Die Funktion des Hauptteils 22 besteht im wesentlichen darin, einen inneren Kanal entweder auszubilden oder aufzunehmen. Im gezeigten Ausführungsbeispiel ist das Gehäuse 20 ein Gußstück, in dem der innere Kanal 26 freigelassen ist. Stattdessen kann der innere Kanal 26 aber auch durch ein entsprechend abgewinkeltes Rohrstück ausgeführt sein, das von einem Gehäuse 20 aus Kunststoff umschlossen oder gehalten wird.

Der innere Kanal 26 verläuft V-förmig innerhalb des Gehäuses 20. An einem dem Handgriff 24 gegenüberliegenden Gewindebereich 28 ist ein erstes Kugelventil, beispielsweise ein 3/8 Zoll Kugelventil, eingeschraubt. Es hat einen lichten Durchmesser von etwa 1 cm, der völlig durch die gleichgroße Kugelbohrung freigegeben wird. Dadurch wird insgesamt ein sehr großer freier Durchflußquerschnitt erreicht. Da bei Kugelventilen mit einer Betätigung des kugelförmigen Ventilkörpers keine Volumenänderung des Innenraums verbunden ist, läßt sich das Kugelventil auch betätigen, wenn sich in ihm ausgehärteter Kunststoffschaum befindet, der lediglich am Außenrand des kugelförmigen Ventilkörpers abgeschert, aber nicht verdrängt wird. Weiterhin läßt sich das Kugelventil einfach reinigen, die Kugel kann im Sinne des Handgriffs herausgezogen werden.

Auf das erste Kugelventil ist ein Adapter 32 aufgeschraubt, der für die Aufnahme eines handelsüblichen Druckbehälters für Polyurethan ausgelegt ist und für sich bekannt ist.

Im vorderen Bereich des Hauptteils 22 ist ein weiterer Gewindebereich 34 ausgebildet, in den ein zweites Kugelventil 36, das dem ersten Ventil 30 gleich sein kann, eingeschraubt ist. Es ist ebenfalls ein 3/8-Zoll Kugelventil. Seine Ventilwelle 37 verläuft quer zum Hauptteil 22 und zum Handgriff 24 und trägt außerhalb der Stopfbüchse 38 einen L-Hebel 40, der zusammen mit einem gebogenen Handstück 42 den Abzugshebel bildet. Auf Grund des L-Hebels 40 kann das Handstück 42 in der Ebene des Hauptteils 22 und des Handgriffs 24 verschwenkt werden. An ihm liegt eine Wickeldruckfeder 44 an, die sich in einer Ausnehmung des Handgriffs 24 abstützt und auf einen Stift des Handstücks 42 gesteckt ist. Sie belastet das zweite Kugelventil 36 in Schließrichtung vor. Schließlich ist im Handgriff 24 noch eine Gewindebohrung 46 für eine Stellschraube 48 vorgesehen, durch die der Schwenkwinkel des Handstücks 42 begrenzt werden kann.

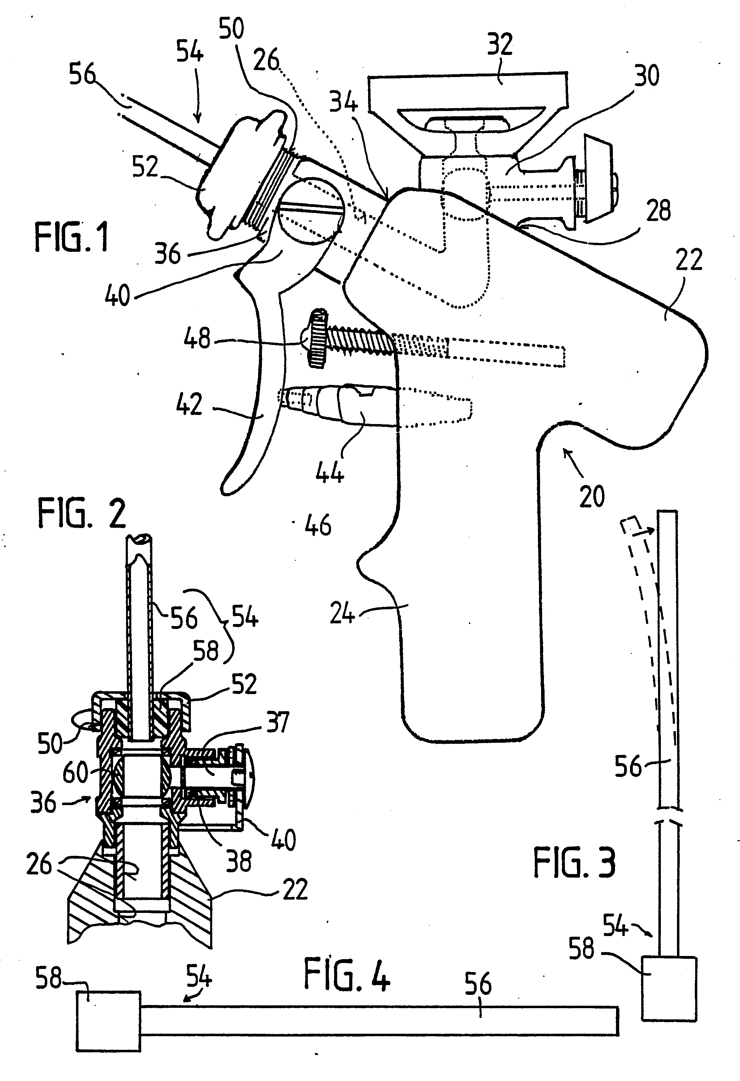

Auf das vordere Ende des zweiten Kugelventils 36, das einen Außengewindebereich 50 aufweist, ist eine Überwurfmutter 52 aufgeschraubt, sie dient der Befestigung des Spritzrohrs 54. Dieses besteht, wie auch aus den Figuren 3 und 4 ersichtlich ist, aus einem eigentlichen Rohr 56 und einer zylindrischen, wesentlich dickeren Muffe 58. Wie aus Figur 2 ersichtlich ist, füllt die Muffe den Raum zwischen dem kugelförmigen Ventilkörper 60 des zweiten Kugelventils 36 und der Überwurfmutter 52 soweit wie möglich aus, so daß ein geringstmöglicher Freiraum übrig bleibt. Über die Muffe 58 wird das Spritzrohr 54 befestigt und gehalten.

In der praktischen Ausführung werden als Kugelventile 30, 36 zwei normale, handelsübliche, gerade 3/8-Zoll Ventile verwendet. Der Innengewindebereich des zweiten Kugelventils 36 wird über ein geeignetes Zwischenstück mit der Gewindebohrung 47 des Hauptteils 22 verbunden, beim ersten Kugelventil 30 wird der Außengewindebereich direkt in den Gewindebereich 28 eingeschraubt, der Innengewindebereich nimmt den Adapter 32 auf.

Im Ausführungsbeispiel nach Figur 3 ist ein Spritzrohr dargestellt, das aus einem Rohr 56 aus biegsamem Kunststoff (siehe die Figur) und eine dieses übergreifenden und mit ihm verbundenen Muffe 58 in Form einer Hülse aus Kunststoff besteht. Das Spritzrohr 54 nach Figur 4 ist ebenso aufgebaut, besteht jedoch aus einem biegeweichen Rohr 52, das im Gegensatz zum Ausführungsbeispiel nach Figur 3 nach Entlastung einer Biegebeanspruchung nicht wieder die ursprüngliche, gerade Form einnimmt, sondern die ihm vermittelte Verbiegung beibehält. Ein derartiges biegeweiches Rohr ist beispielsweise ein Metallrohr, zum Beispiel aus Weichkupfer. Stattdessen kann aber auch ein Kunststoffrohr verwendet werden, das sich entweder permanent oder nach Zufuhr von Wärme verbiegen läßt. Insbesondere ist also an den Einsatz eines Rohres aus thermoplastischem Kunststoff gedacht.

Da die Spritzrohre 54 leicht austauschbar sind, kann jeweils für einen bestimmten Einsatzzweck ein spezielles Spritzrohr verwendet werden. Dieses kann durchaus mehrere Abwinklungen haben, beispielsweise L-oder U-förmig verlaufen, eine beliebige Krümmung haben oder dergleichen und dadurch hinsichtlich seiner Länge, seines Außendurchmessers und seiner Formgebung bzw. Biegsamkeit praktisch jedem beliebigen Einsatzzweck angepaßt werden.

In einer geänderten, jedoch in den Figuren nicht dargestellten Ausbildung ist das zweite Kugelventil 36 durch ein an derselben Stelle befindliches Nadelventil ersetzt. An dessen Austrittsbereich ist ein Spritzrohr anschließbar, wobei in dieser Ausführung vorzugsweise das Gehäuse einstückig den Außenmantel des Nadelventils und auch den Außengewindebereich 50 bildet. Das Nadelventil besteht aus einer sehr kurzen, beispielsweise fünfzehn Millimeter langen, und mit dem Abzugshabel 42 verbundenen Nadel, die axial innerhalb des beschriebenen Gehäusefortsatzes bewegbar angeordnet ist und im Ruhezustand federbelastet gegen eine innere Kegelfläche gepreßt wird, die sich auf der Innenseite des Außengewindebereichs 50 befindet.

## Ansprüche

1. Spritzpistole für das Verspritzen von schäumenden Kunststoffen, insbesondere einkomponentigem Polyurethan, mit einem Gehäuse (20), in dem ein Handgriff (24) ausgebildet ist, mit einem über einen schwenkbaren Abzugshebel (40, 42) betätigbaren Steuerventil (36) und mit einem inneren Kanal (26), der ein vorderes Austrittsende mit einem Anschlußbereich für einen Druckbehälter, in dem sich Prepolymer befindet, verbindet, dadurch gekenzeichnet, daß im Gehäuse (20) in unmittelbarer Nähe des Anschlußbereiches ein Kugelventil (30) im Kanal (26) angeordnet ist.

2. Spritzpistole nach Anspruch 1, dadurch gekennzeichnet, daß ein Spritzrohr (54) lösbar mit dem Steuerventil (36) verbunden ist, und daß das Spritzrohr (54) ein biegsames, elastisches oder mechanisch bzw. durch Wärmezufuhr dauerhaft biegbares Rohr (56) aufweist.

3. Spritzpistole nach Anspruch 1 oder 2, dadurch gekennzeichnet, daß das Steuerventil (36) möglichst nahe dem Gehäuse (20), dem Abzugshebel (40, 42) und dem Kugelventil (30) angeordnet ist, und daß das Steuerventil (36) entweder als (zweites) Kugelventil oder als Nadelventil ausgebildet ist.

4. Spritzpistole nach einem der Ansprüche 1 bis 3, dadurch gekennzeichnet, daß die Innenwand des Kanals (26) möglichst zylindrisch, glatt und ohne Toträume ausgeführt ist und daß der Kanalinnendurchmesser dem freien Durchlaßquerschnitt des Kugelventils (30) entspricht.

5. Spritzpistole nach einem der Ansprüche 1 bis 4, dadurch gekennzeichnet, daß das Spritzrohr (54) eine Überwurfmutter aufweist, die Vorsprünge für eine Handbetätigung hat.

6. Spritzpistole nach einem der Ansprüche 1 bis 5, dadurch gekennzeichnet, daß das Steuerventil (36) in möglichst geringer Entfernung vom Handgriff (24) angeordnet ist.

7. Spritzpistole nach einem der Ansprüche 1 bis 6, dadurch gekennzeichnet, daß das (erste) Kugelventil (30) gegenüber einem Hauptteil (22) des Gehäuses (20) nach vorn geneigt verläuft und mit der Achse des Austrittsbereichs einen Winkel kleiner 90 Grad, vorzugsweise kleiner 70 Grad, einschließt.

8. Spritzpistole nach einem der Ansprüche 1 bis 7, dadurch gekennzeichnet, daß das (erste) Kugelventil (30) in einem Winkel von 60 Grad zum Steuerventil (36) angeordnet ist.

9. Spritzpistole nach einem der Ansprüche 1 bis 8, dadurch gekennzeichnet, daß die beiden Ventile (30, 36) gerade Ventile sind.

FIG.1

FIG. 2

FIG. 3

FIG. 4

0 255 060